# EUROPEAN PATENT APPLICATION

(11) **EP 1 767 559 A1**
(43) Date of publication of application: **28.03.2007**
(21) Application number: 06254915.9
(22) Date of filing: 22.09.2006
(51) Int. Cl.: C08G 18/32

(54) **Methods of preparing and using polyurea elastomers**

(30) Priority: 22.09.2005 US 719525 P; 07.12.2005 US 297286
(71) Applicant: The Hanson Group, LLC, Duluth GA 30097 (US)
(72) Inventor: Hanson, Wallace Lee Jr., Duluth, Georgia 30097 (US); Primeaux, Dudley Joseph II, Elgin, Texas 78621 (US); Scott, Ray Vernon Jr., Blacksburg, Virginia 24060 (US)
(74) Representative: Hallybone, Huw George

(57) **Abstract**

Methods of making and using polyurea elastomers are disclosed. More specifically, methods of making two components polyurea elastomers are disclosed. In addition, methods of using polyurea elastomers in fillers, adhesives, joint sealants, mastics, and coatings, particularly sprayable coatings, are disclosed. The products produced by these methods are also disclosed.

## Description

### CROSS REFERENCE TO RELATED APPLICATIONS

This application claims priority to U.S. Application No. 11/297,286, filed December 7, 2005, which claims the benefit of U.S. Application No. 60/719,525, filed September 22, 2005, the entire disclosures of which are incorporated herein by reference.

### FIELD OF THE INVENTION

The invention relates generally to polyurea elastomers and methods of preparing and using polyurea elastomers. More specifically, the invention relates to methods of preparing two components polyurea elastomers and methods of their use in filler, adhesives, joint sealants, mastics, and coatings, particularly sprayable coatings.

### BACKGROUND OF THE INVENTION

Polyurea elastomers are conventionally used for filler, adhesives, joint sealants, mastics, and coatings, particularly sprayable coatings. Polyurea elastomers are generally formed by the reaction of material having isocyanate functionality with a material having amine functionality. Often, a chain extender, a bifunctional material, is employed to modify the properties of the material during processing, application, or performance. The polyurea elastomers may be aliphatic, aromatic, or a combination of both.

Polyurea elastomers have previously been made using primary amines as the material having amine functionality. One common problem with such systems is the high reactivity of the polymerization reaction between the material having amine functionality and the material having isocyanate functionality. As a result, it is difficult to obtain smooth finishes in coatings made from the polyurea elastomers. To decrease the reactivity of the system, it has been previously proposed to employ secondary amines as the amine component of the system because isocyanates react more slowly with secondary amines than they react with primary amines. One such secondary amine that has been proposed is polyaspartic ester, which is derived from a primary polyamine and diethyl maleate, for example. Use of the polyaspartic esters, however, results in slow polymerization reaction. A polyaspartic ester system has proven to be too slow for rapid coating applications. Hence, these systems heretofore require catalysts, such as organo tin compounds, to increase the reactivity to acceptable levels. However, the catalysts increase cost of such polyureas systems and increase the complexity of the manufacturing processes. In addition, use of catalysts lead to poor component stability over extended periods, increased moisture sensitivity in the system, overall system reactivity being affected by changes in environmental and substrate temperature, and polymer breakdown under stressful conditions that do not normally affect polyurea and polyurethane systems (*i.e.,* high heat/humidity and ultraviolet light).

Sprayable polyurea elastomer systems are particularly useful. One of the shortcomings associated with aromatic polyurea elastomer systems, which generally are prepared by reacting an aromatic isocyanate with an active hydrogen component in the presence of an aromatic chain extender, is that they exhibit poor stability when exposed to ultraviolet radiation. This becomes particularly problematic when the substrate to be coated is continuously subjected to ultraviolet exposure, as is the case, for example, with a rooftop or a vehicle bedliner. The resulting ultraviolet degradation of the elastomer system typically is manifested by a change in color; a general loss of product integrity, such as cracking; and an adverse reduction in properties, such as tensile strength, tear strength and elongation.

The most widely employed aromatic chain extender is diethylenetoluenediamine (DETDA). While DETDA generally exhibits good processing characteristics, DETDA contributes to a system that is unstable to ultraviolet light and provides a rigid elastomer system, which, because of its rigidity, has difficulty in assuming the detail or contour of the substrate to be coated.

Non-aromatic, i.e. aliphatic, active hydrogen components, are known to increase ultraviolet stability. For instance, Rowton, Journal of Elastomers and Plastics, Volume 9, October 1977, describes the use of cyanoethylated polyoxypropylene polyamines as the active hydrogen component in polyurea systems to provide light stable systems, but is silent with respect to employing aliphatic chain extenders.

In certain two-component aliphatic polyurea elastomer processes, low molecular weight polyoxyalkylene polyamines and cycloaliphatic diamines have been used successfully as chain extenders. Conventional primary amine aliphatic chain extenders include trans-1,4-diaminocyclohexane; 1,2-diaminocyclohexane; and 1,6-diaminohexane. These and other known primary amine aliphatic chain extenders work well, but because they react very rapidly with isocyanate, they are difficult to use in spray systems, inasmuch as polymerization occurs so rapidly that the polymer can be virtually unsprayable. Other low molecular weight, linear primary amine chain extenders exhibit a rapid reactivity that result in poor mixing and elastomer cure. Certain secondary amine aliphatic chain extenders, *e.g.*, sym-dialkylethylenediamines, are too slow for practical, commercial applications. Additionally, elastomer systems prepared with certain aliphatic chain extenders have exhibited processing characteristics notoriously inferior to those exhibited by systems fabricated from DETDA.

Other attempts have been made to develop polyurea elastomers and processes using aliphatic chain extenders. For example, US-A-5,480,955 describes aliphatic spray polyurea elastomers comprising an (A) component that includes an aliphatic isocyanate and a (B) component that includes (1) an amine-terminated polyoxyalkylene polyol, and (2) an amine-terminated aliphatic chain extender. In addition, US-A-5,162,388 discloses that the properties and processing characteristics of sprayable polyurea elastomers may be improved by using a cycloaliphatic diamine chain extender selected from the group consisting of cis-1,4-diaminocyclohexane; isophoronediamine; m-xylenediamine; 4,4'-methylenedicyclohexylamine; methanediamine; 1,4-diaminoethyl-cyclohexane; and alkyl-substituted derivatives thereof.

Despite these efforts, there is still a need for polyurea elastomers with proper balance of suitable processing and application characteristics and desirable performance properties, including polyureas that exhibit fast cure (especially without a catalyst), are solventless, cure at low temperature, are tough and flexible, and exhibit ultraviolet stability, especially polyurea elastomers that may be applied via spraying. The present invention is directed to these, as well as other, important needs.

### SUMMARY OF THE INVENTION

The invention provides polyurea elastomers and methods for their preparation and use, especially polyurea elastomers that may be applied via spraying. The polyurea elastomers provide many beneficial properties, many of which overcome shortcomings of the prior art.

In one embodiment, the invention is directed to methods, comprising the steps of:
preparing a resin composition comprising:
   a.. 3-{3-[(2-cyanoethylamino)methyl]-3,5,5-trimethylcyclohexylamino propionitrile; and
   b. optionally, at least one polyamine, preferably a polyetheramine;
preparing an isocyanate composition comprising at least one material having isocyanate functionality; and
reacting said resin composition with said isocyanate composition to form a polyurea elastomer.
In certain embodiments, the resin composition may optionally comprise at least one polyol. In certain embodiments, the 3-{3-[(2-cyanoethylamino)methyl]-3,5,5-trimethyl cyclohexyl aminopropionitrile is formed by reacting 3-aminomethyl-3,5,5-trimethylcyclohexylamine and acrylonitrile. In certain embodiments, the method further comprises the step of applying said polyurea elastomer to form a coating or mastic. In certain embodiments, the method further comprises the step of applying said polyurea elastomer to form a filler, adhesive, or joint sealant.

In another embodiment, the invention provides methods for forming a polyurea elastomers coating, comprising the steps of:
preparing a resin composition comprising:
   a.. 3-{3-[(2-cyanoethylamino)methyl]-3,5,5-trimethylcyclohexylamino propionitrile;
   b. at least one polyamine;
preparing an isocyanate composition comprising at least one material having isocyanate functionality; and
reacting said resin composition with said isocyanate composition to form polyurea elastomer coating.

In yet other embodiments, the invention is directed to the polyurea elastomer products produced by the methods of the invention.

### DETAILED DESCRIPTION OF THE INVENTION

The present invention relates generally to polyurea elastomers and methods for their preparation and use, especially polyurea elastomers that may be applied via spraying. The novel polyurea elastomers provide many beneficial properties, many of which overcome shortcomings of the prior art.

As used herein, the term "polyurea" means a polymer formed from the reaction of an isocyanate and an amine.

As used herein, the term "elastomer" means a macromolecular material that returns rapidly to its approximate initial dimensions and shape after substantial deformation (generally at least twice its original dimension under ambient conditions) by a weak stress and the subsequent release of that stress. Elastomers have a high modulus of elasticity and toughness.

As used herein, the term "polyetheramine" means a polyether compound having amine functionality, especially where the compound is amine-terminated. Polyetheramines may be of the following general formulae:

NH₂CH(CH₃)CH₂-[OCH₂CH(R)]ₓ-[OCH₂CH(CH₃)]_{y}-NH₂;

NH₂CH(CH₃)CH₂-[OCH₂CH(R)]ₓ-NH₂;

NH₂CH(CH₃)CH₂-[OCH(CH₃)CH₂]ₓ-[OCH₂CH₂]_{y}-[OCH₂CH(R)]ₓ-NH₂;

where
R is H or C₁-C₆ alkyl;
x is about 1 to about 50; and
y is about 1 to about 50; 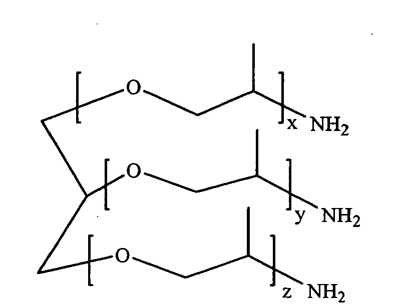
where
x is about 1 to about 50;
y is about 1 to about 50; and
z is about 1 to about 50 (such as T-5000 available from The Hanson Group. LLC where x+y+z = about 81); 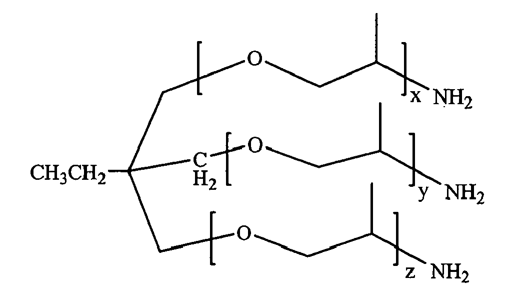
where
x is about 0 to about 3;
y is about 0 to about 3; and
z is about 0 to about 3 (such as T-403 available from The Hanson Group. LLC where x+y+z= about 5.3)

The term "polyoxy(C₁-C₆)alkylenediamine" means a polyetheramine having two amine groups and where R is H or C₁-C₆ alkyl.

The term "polyol" means a substance, usually a liquid, containing at least two hydroxyl (-OH) groups attached to a single molecule. The most common types of polyols used in the manufacture of polyurethanes are also polyethers and polyesters.

As used herein, the term "material having isocyanate functionality" means a small molecule, monomeric unit, or a polymeric material that contains an -N=C=O moiety, and specifically includes, adducts, prepolymers, and quasi-prepolymers.

As used herein, the term "adduct" means a reactive product or monomer formed by reacting two polyfunctional molecules.

As used herein, the term "prepolymer" means substance formed by pre-reacting at least a portion of the material having isocyanate functionality with some or all of the amine functionality of the resin composition. A final amount of amine (either from the amine-functional chain extender and/or other amine-functional components of the resin composition) (referred to as the "curative") is added to the prepolymer to complete the reaction.

As used herein, the term "quasi-prepolymer" means a reaction product of a polyol or blend of polyols with a large excess of isocyanate and includes a polyolisocyanate adduct with free isocyanate contents between 16 and 32% by weight.

In one embodiment, the invention is directed to methods, comprising the steps of:
preparing a resin composition comprising:
   a.. 3-{3-[(2-cyanoethylamino)methyl]-3,5,5-trimethylcyclohexylamino propionitrile; and
   b. optionally, at least one polyetheramine;
preparing an isocyanate composition comprising at least one material having isocyanate functionality; and
reacting said resin composition with said isocyanate composition to form a polyurea elastomer.

In certain embodiments, the resin composition may optionally comprise at least one polyol.

In certain preferred embodiments, the 3-{3-[(2-cyanoethylamino)methyl]-3,5,5-trimethyl cyclohexyl aminopropionitrile is formed by reacting 3-aminomethyl-3,5,5-trimethylcyclohexylamine and acrylonitrile. In these preferred embodiments, it especially preferred that an excess of said trimethylcyclohexylamine is present.

The polyamines useful in the resin composition of the invention are active amine hydrogen containing materials and generally correspond to the formula: X(NH₂)ₙ, wherein X represents an organic group that may or may not contain one or more ether linkages and that has a valence of n and is inert towards isocyanate groups at a temperature of about 100°C or less. Other suitable polyamines that do not contain ether linkage include polyesteramines, polysilaneamines, polysiloxaneamines, polybutadieneamines, and mixtures thereof. In certain embodiments, X represents a divalent hydrocarbon group obtained by removal of the amino groups from an aliphatic, or cycloaliphatic polyamine, particularly a diamine. The "n" represents an integer with a value of at least about 2, in certain embodiments from about 2 to about 4, and in one embodiment 2.

Representative examples of such polyamines that do not contain one or more ether linkages include, but are not limited to, ethylene diamine, 1,2-diaminopropane, 1,4-diaminobutane, 1,3-diaminopentane, 1,6-diaminohexane, 2,5-diamino-2,5-dimethlhexane, 2,2,4- and/or 2,4,4-trimethyl-1,6-diaminohexane, 1,11-diaminoundecane, 1,12-diaminododecane, 1,3- and/or 1,4-cyclohexane diamine, 1-amino-3,3,5-trimethyl-5-aminomethyl-cyclohexane, 2,4- and/or 2,6-hexahydrotoluylene diamine, 2,4'- and/or 4,4'-diaminodicyclohexyl methane and 3,3'-dialkyl-4,4'-diamino-dicyclohexyl methanes such as 3,3'-dimethyl-4,4-diamino-dicyclohexyl methane and 3,3'-diethyl-4,4'-diaminodicyclohexyl methane; aromatic polyamines such as 2,4- and/or 2,6-diaminotoluene and 2,6-diaminotoluene and 2,4'- and/or 4,4'-diaminodiphenyl methane; and polyoxyalkylene polyamines (also referred to herein as amine terminated polyethers), especially diamines, as are described herein below. Mixtures of polyamines can be employed in preparing the aspartic esters used in the practice of this invention.

Suitable polyetheramine include, but are not limited to, polyoxy(C₁-C₆)alkylenediamines, such as polyoxyethylene diamine, polyoxypropylenediamine, polyoxybutylenediamine, polyoxypropylene-polyoxy(C₁-C₆)alkylene-diamine, or a mixture thereof. Preferably, the polyoxyalkylenediamine is a polyoxypropylenediamine. A number of polyetheramines are commercially available under the tradenames of PEA from BASF Corporation, JEFFAMINE® from Huntsman Corporation, , and Poly-A® from Arch Chemicals, Inc. Particularly preferred polyetheramines include polyoxypropylenediamine and polytetramethylene ether glycol (PTMEG or PTMO or, PTMG) diamine.

Suitable amine terminated polyethers are selected from aminated diols or triols and, more preferably, include a blend of aminated diols or triols or both. More preferably, the amine terminated polyethers are selected from mixtures of high molecular weight polyols, such as mixtures of difunctional and trifunctional materials. However, a single high molecular weight aminated polyurea can be used. Also, high molecular weight amine terminated alkylenes and simple alkyl amines are included within the scope of this invention, and may be used alone or in combination with the aforementioned amine terminated polyols. In addition, other amine terminated materials having different molecular weights or different chemical compositions, may be used. The term "high molecular weight" is intended to include polyether amines having a molecular weight of at least about 1,500.

Especially preferred are amine terminated polyethers, including primary and secondary amine terminated polyethers of greater than 1,500 average molecular weight, having a functionally of from about 2 to about 6, preferably from about 2 to about 3, and amine equivalent weight of from about 750 to about 4,000. Mixtures of amine terminated polyethers may be used. In a preferred embodiment, the amine terminated polyethers have an average molecular weight of at least about 2,000. These materials may be made by various methods known in the art.

The amine terminated polyethers useful in this invention may be, for example, polyether resins made from an appropriate initiator to which lower alkylene oxides, such as ethylene oxide, propylene oxide, butylene oxide, or mixtures thereof, are added with the resulting hydroxyl terminated polyols then being aminated. When two or more oxides are used, they may be present as random mixtures or as blocks of one or the other polyether. In the amination step, it is highly desirable that the terminal hydroxyl groups in the polyols be essentially all secondary hydroxyl groups for ease of amination. If ethylene oxide is used, it is desirable to cap the hydroxyl terminated polyol with a small amount of higher alkylene oxide to ensure that the terminal hydroxyl groups are essentially all secondary hydroxyl groups. The polyols so prepared are then reductively aminated by known techniques, such as described in US-A-3,654,370, for example, the contents of which are incorporated herein by reference. Normally, the amination step does not completely replace all of the hydroxyl groups. However, the great majority of hydroxyl groups are replaced by amine groups. Therefore, in a preferred embodiment, the amine terminated polyether resins useful in this invention have greater than about 80 percent of their active hydrogens in the form of amine hydrogens.

Preferred are the PEA brand series of polyether amines available from BASF Corporation; they include Polyetheramine D230 (PEA D230), Polyetheramine D2000 (PEA D2000), Polyetheramine D400 (PEA D400), Polyetheramine T403 (PEA T403), Polyetheramine T5000 (PEA T5000). Also, preferred are the JEFFAMINE® brand series of polyether amines available from Huntsman Corporation; they include JEFFAMINE® D-2000, JEFFAMINE® D-4000, JEFFAMINE® D-3000 and JEFFAMINE® T-5000.

The resin composition may optionally further comprise components that are reactive with the isocyanate functionality, including, for example, hydroxy functional polyacrylates known for use in polyurea systems. These compounds are hydroxyl-containing copolymers of olefinically unsaturated compounds having a number average molecular weight (Mn) determined by vapor pressure or membrane osmometry of about 800 to about 50,000, preferably about 1000 to about 20,000 and more preferably about 5000 to about 10,000, and having a hydroxyl group content of about 0.1 % to about 12% by weight, preferably about 1% to about 10% by weight and most preferably about 2% to about 6% by weight. The copolymers are based on olefinic monomers containing hydroxyl groups and olefinic monomers which are free from hydroxyl groups. Examples of suitable monomers include vinyl and vinylidene monomers such as styrene, o-methyl styrene, o- and p-chloro styrene, o-, m- and p-methyl styrene, p-tert-butyl styrene; acrylic acid; (meth)acrylonitrile; acrylic and methacrylic acid esters of alcohols containing 1 to 8 carbon atoms such as ethyl acrylate, methyl acrylate, n- and isopropyl acrylate, n-butyl acrylate, 2-ethylhexyl acrylate, 2-ethylhexyl methacrylate, iso-octyl acrylate, methyl methacrylate, ethyl methacrylate, butyl methacrylate and isooctyl methacrylate; diesters of fumaric acid, itaconic acid or maleic acid having 4 to 8 carbon atoms in the alcohol component; (meth)acrylic acid amide; vinyl esters of alkane monocarboxylic acids having 2 to 5 carbon atoms such as vinyl acetate or vinyl propionate; and hydroxyalkyl esters of acrylic acid or methacrylic acid having 2 to 4 carbon atoms in the hydroxyalkyl group such as 2-hydroxyethyl-, 2-hydroxypropyl-, 4-hydroxybutylacrylate and methacrylate and trimethylol propane-mono- or pentaerythritomono-acrylate or methacrylate. Mixtures of the monomers exemplified above may also be used for the preparation of the hydroxy functional polyacrylates.

Suitable polyesteramines include compounds that result when polycarboxylic acids, tertiary amine functional polyols, monofunctional carboxylic acids and/or monofunctional alcohols, and, optionally, polyols and/or hydroxyacids are esterified, such as those described in U.S. Patent Publication No. 2005/0063938, the entire disclosure of which is incorporated herein by reference. Other suitable polyesteramines are ester quaternaries that are typically derived by the full or partial esterification of a trialkanolamine, typically triethanolamine, followed by the quaternatization of the tertiary nitrogen atom with methyl chloride or dimethyl sulfate.

Suitable polysiloxaneamines and polysilaneamines include the aminofunctional organopolysiloxanes disclosed in British Patent 942,587 and the amino functional silicone resin disclosed in US-A-5,135,993, the entire disclosures of which are incorporated herein by reference.

Suitable polybutadieneamines include polybutadiene functionalized with at least one amine group.

Suitable polyols include any organic compound having more than one hydroxyl (-OH) group per molecule. A number of suitable of polyols are commercially available, including, for example, polyether polyol (PPG) and polytetramethylene ether glycol (PTMEG), which are available from the Dow Chemical Company under the VORANOL® brand, Bayer under the MULTRANOL® brand, Huntsman Corporation under the JEFFOL® brand, BASF under the PLUROL® and PLURACOL® brands, and Arch Chemicals, Inc. under the PolyG brand.

Suitable materials having isocyanate functionality, include, but are not limited to, an adduct having isocyanate functionality, a prepolymer having isocyanate functionality, and a quasi-prepolymer having isocyanate functionality. The material having isocyanate functionality may be aliphatic, aromatic, or a combination of both. Preferably, the material having isocyanate functionality is aliphatic. A number of number of materials having isocyanate functionality are commercially available under the tradenames of LUPRANATE® from BASF Corporation; RUBINATE® from Huntsman Polyurethanes; VORASTAR^{™} from The Dow Chemical Company; and MONDUR® from Bayer.

Suitable materials having isocyanate functionality, include, but are not limited to, the known polyisocyanates of polyurethane chemistry. Examples of suitable low molecular weight polyisocyanates having a molecular weight of 168 to 300 include hexamethylene diisocyanate, 2,2,4- and/or 2,4,4-trimethyl-1,6-hexamethylene diisocyanate, dodecamethylene diisocyanate, 1,4-diisocyanatocyclohexane, 1-isocyanato-3,3,5-trimethy-5-isocyanatomethylcyclohexane (IPDI), 2,4'- and/or 4,4'-diisocyanatodicyclohexyl methane, 2,4- and/or 4,4'-diisocyanato-diphenyl methane and mixtures of these isomers with their higher homologues that are obtained in known manner by the phosgenation of aniline/formaldehyde condensates, 2,4-and/or 2,6-diisocyanatotoluene and any mixtures of these compounds.

It is preferred, however, to use derivatives of these monomeric polyisocyanates, as is conventional in coatings technology. These derivatives include polyisocyanates containing biuret groups as described, for example, in US-A-3,124,605, 3,201,372 and DE 1,101,394; polyisocyanates containing isocyanurate groups as described, for example, in US-A-3,001,973, DE 1,022,789, DE 1,222,067, DE 1,027,394, DE 1,929,034 and DE-2,004,048; polyisocyanates containing urethane groups as described, for example, in DE 953,012, BE 752,261, US-A-3,394,164 and US-A-3,644,457; polyisocyanates containing carbodiimide groups as described in DE 1,092,007, US-A-3,152,162, DE 2,504,400, DE 2,537,685 and DE 2,552,350; and polyisocyanates containing allophanate groups as described, for example, in GB 994,890, BE 761,626 and NL 7,102,524.

The modified polyisocyanates are particularly preferred: N,N',N-tris-(6-isocyanatohexyl)-biuret and mixtures thereof with its higher homologues and N,N',N-tris-(6-isocyanatohexyl)-isocyanurate and mixtures thereof with its higher homologues containing more than one isocyanurate ring.

Isocyanate group-containing prepolymers and semi-prepolymers based on the monomeric simple or modified polyisocyanates exemplified above and organic polyhydroxyl compounds are also preferred. These prepolymers and semi-prepolymers generally have an isocyanate content of about 0.5% by weight to 30% by weight, based on the total weight of the prepolymer or semi-prepolymer, preferably about 1% by weight to 20% by weight, and are prepared in known manner by the reaction of the above mentioned starting materials at an NCO/OH equivalent ratio of about 1.05:1 to about 10:1 preferably about 1.1:1 to about 3: 1, this reaction being optionally followed by distillative removal of any unreacted volatile starting polyisocyanates still present.

The prepolymers and semi-prepolymers may suitably be prepared from low molecular weight polyhydroxyl compounds having a molecular weight of about 50 to about 300, such as ethylene glycol, propylene glycol, trimethylol propane, 1,6-dihydroxy hexane; low molecular weight, hydroxyl-containing esters of these polyols with dicarboxylic acids of the type exemplified hereinafter; low molecular weight ethoxylation and/or propoxylation products of these polyols; and mixtures of the preceding polyvalent modified or unmodified alcohols.

The prepolymers and semi-prepolymers are, however, preferably prepared from the known relatively high molecular weight polyhydroxyl compounds of polyurethane chemistry that have a molecular weight of about 300 to about 8000, preferably about 1000 to about 5000, as determined from the functionality and the OH number. These polyhydroxyl compounds have at least two hydroxyl groups per molecule and generally have a hydroxyl group content of about 0.5% by weight to about 17% by weight, based on the total weight of the molecule, preferably about 1% by weight to 5% by weight.

Both aliphatic and aromatic isocyanates can be used in the present invention. The aliphatic isocyanates employed in the present invention are well known in the polyurea elastomer art. Thus, for instance, the aliphatic isocyanates are of the type described in US-A-4,748,192, the contents of which are incorporated herein by reference. Accordingly, they are typically aliphatic diisocyanates and, more particularly, are the trimerized or the biuretic form of an aliphatic diisocyanate, such as hexamethylene diisocyanate, or the bifunctional monomer of the tetraalkyl xylene diisocyanate such as the tetramethyl xylene diisocyanate. Also, cyclohexane diisocyanate is considered the preferred aliphatic isocyanate. Other useful aliphatic polyisocyanates are described in US-A-4,705,814, which is incorporated herein by reference. They include aliphatic diisocyanates, for example, alkylene isocyanates with 4 to 12 carbon atoms in the alkylene radical, such as 1,12-dodecane diisocyanate and 1,4-hexamethylene diisocyanate. Also useful are cycloaliphatic isocyanates, such as 1,3- and 1,4-cyclohexane diisocyanate, as well as any desired mixture of these isomers: 1-isocyanato-3,3,5-trimethyl-5-isocyanatomethyl-cyclohexane (isophorone diisocyanate); 4,4', 2,2'-and 2,4'-dicyclohexylmethane diisocyanate; as well as the corresponding isomer mixtures, and the like. The aforementioned isocyanates can be used alone or in combination.

A wide variety of aromatic polyisocyanates can also be utilized to produce the aromatic elastomer system of the present invention. Typical aromatic polyisocyanates include p-phenylene diisocyanate, polymethylene polyphenyl-isocyanate, 2,6-toluene diisocyanate, dianisidine diisocyanate, bitolylene diisocyanate, naphthalene-1,4-diisocyanate, bis(4-isocyanato phenyl)methane, and 4,4'diphenylpropane diisocyanate.

Other aromatic polyisocyanates used in the practice of the invention are naphthalene-bridged polyphenyl polyisocyanates mixtures which have a functionality of from about 2 to about 4. These latter isocyanate compounds are generally produced by the phosgenation of corresponding naphthalene bridged polyphenyl polyamines, which are conventionally produced by the reaction of formaldehyde and primary aromatic amines, such as aniline, and the presence of hydrochloric acid and/or other acidic catalysts. Known processes for preparing polyamines and corresponding naphthalene-bridged polyphenyl polyisocyanates there from are described in the literature and in many patents, for example, US-A-2,683,730; US-A-2,950,263; US-A-3,012,008; US-A-3,344,162; and US-A-3,362,979.

Usually naphthalene-bridged polyphenyl polyisocyanates mixtures contain from about 20% to about 100% by weight naphthalene diphenyl diisocyanate isomers, with the remainder being polymethylene polyphenyl diisocyanates having higher functionalities and higher molecular weights. Typical of these are polyphenyl polyisocyanates mixtures containing from about 20% to about 100% by weight diphenyl diisocyanate isomers, of which from about 20% to about 95% by weight thereof is the 4,4'-isomers with the remainder being polymethylene polyphenyl polyisocyanates of higher molecular weight and functionality that have an average functionality of from about 2.1 to about 3.5. These isocyanate mixtures are known, commercially available materials and can be prepared by the process described in US-A-3,362,979.

By far the most preferred aromatic polyisocyanate is naphthalene bis (4-phenyl isocyanate)("MDI"). Pure MDI, quasi-prepolymers of MDI, and modified pure MDI are useful. Materials of this type may be used to prepare suitable elastomers. Since pure MDI is a solid and, thus, inconvenient to use, liquid products based on MDI or naphthalene are also disclosed. For example, US-A-3,394,164, which is incorporated herein by reference, describes a liquid MDI product. More generally, uretomine modified pure MDI is also included. This product is made by heating pure distilled MDI in the presence of a catalyst. Examples of commercial materials of this type are ISONATE® 125M (pure MDI) and ISONATE® 143L, RUBINATE® LF-168 and RUBINATE® LF-209 ("liquid" MDI's). The ISONATE products are available from The Dow Chemical Company, and the RUBINATE® products are available from Huntsman Polyurethanes. Preferably, the amount of isocyanate used to produce the present polyurea elastomers is the equal to or greater than the stoichiometric amount based on the active hydrogen ingredients in the formulation.

It is to be understood that the term "isocyanate" also includes quasi-prepolymers of isocyanates with active hydrogen-containing materials. The active hydrogens-containing materials used to prepare a prepolymer can include a polyol or a high molecular weight amine-terminated polyether, also described herein as amine-terminated alkylenes, or a combination of these materials. The amine-terminated polyethers useful in preparing quasi-prepolymers of isocyanate include the same amine-terminated polyethers described herein as amine-terminated materials for producing polyurea.

The polyols useful in preparing a quasi prepolymer include polyether polyols, polyester diols, triols, tetrols, etc., having an equivalent weight of at least about 500, and preferably at least about 1,000 up to about 4,000. These polyether polyols based on trihydric initiators of about 3,000 molecular weight and above are especially preferred. The polyethers may be prepared from ethylene oxide, propylene oxide, butylene oxide, or mixtures thereof. Other high molecular weight polyols that may be useful in this invention are polyester of hydroxyl-terminated rubbers, for example, hydroxyl terminated polyether polybutadiene. Quasi-prepolymers prepared from hydroxyl-terminated polyols and isocyanates are generally reserved for use with aromatic polyurea systems.

In certain embodiments, the polyurea elastomer system further comprises at least one additive selected from the group consisting of pigment, adhesion promoter, ultraviolet stabilizer, antioxidant, thixotrope, rheology modifier, texturizing agent, defoamer, dispersant, solvent, plasticizer, filler, preservative, antimicrobial, and mixtures thereof.

The additive for improving the ultraviolet stability of the present polyurea elastomer systems comprises up to three elements, which are individually classified as a ultraviolet stabilizing element, a ultraviolet absorber element, and an antioxidant element. The additive can be formulated with any one of the three elements or with any combination of two or more of the elements. Preferably, the additive includes an antioxidant element and either a ultraviolet stabilizing or a ultraviolet absorber element. More preferably, the additive includes all three elements. Even more preferably, the additive comprises about 30% to about 50% by weight ultraviolet stabilizer element, from about 30% to about 50% by weight ultraviolet absorber element, and from about 20% to about 40% by weight antioxidant element. A particularly preferred additive comprises about 40% violate ultraviolet stabilizer amount, about 40% by weight ultraviolet absorber element, and about to 50% by weight antioxidant element. A particularly preferred additive comprises about 40% by weight ultraviolet absorber element, and about 20% by weight antioxidant element.

The ultraviolet stabilizer element useful in the instant invention generally includes a sterically hindered piperidine derivative, and in particular, an alkyl substituted hydroxy piperidine derivative. Preferably, the ultraviolet stabilizer includes the reaction product of an ester of a carboxylic acid and to alkyl substituted hydroxy piperidines. More preferably, the ultraviolet stabilizer element includes bis-(1,2,2,6,6-tetramethyl-4-piperidinyl) sebacate, known as TINUVIN® 765 and commercially available from Ciba-Geigy.

The UV absorber element useful in the instant invention generally includes a substituted benzotriazole, and in particular, a phenyl substituted benzotriazole. Preferably, the UV stabilizer element includes a hydroxyl, alkyl substituted benzotriazole, and more preferably, the UV stabilizer includes 2-(2'-hydroxy-3',5'-di-tert-amylphenyl)benzotriazole, known as TINUVIN® and commercially available from Ciba-Geigy.

The antioxidant element useful in the instant invention generally includes a substituted, sterically hindered phenol, and in particular, a substituted ester of hydroxyhydrocinnamic acid. Preferably, the antioxidant element includes a 3,5-dialkyl ester of hydroxyhydrocinnamic acid, and more preferably, the antioxidant element includes octadecyl 3,5-di-tert-butyl-4-hydroxyhydrocinnamate, known as IRGANOX® 1076 and commercially available from Ciba-Geigy.

Accordingly, a preferred additive contains from about 30% to about 50% by weight bis(1,2,2,6,6-pentamethyl-4-piperidinyl)sebacate as a UV stabilizer, from about 30% to about 50% by weight 2-(2'-hydroxy-3',5'-di-tert-amylphenyl)benzotriazole as a UV radiation absorber, and from about 20% to about 40% by weight octadecyl 3,5-di-tert-butyl-4-hydroxyhydrocinnamate as an antioxidant. An especially preferred additive contains about 40% by weight bis(1,2,2,6,6-pentamethyl-4-piperidinyl)sebacate, about 40 percent by weight 2-(2'-hydroxy-3',5'-di-tert-amylphenyl)-benzotriazole, and about 20 percent by weight octadecyl 3,5-di-tert-butyl-4-hydroxyhydrocinnamate.

The amount of additive incorporated in the polyurea elastomer systems depends on several factors, including the desired stability of the elastomer, so the amount of additive can be adjusted according to the intended use of the elastomer. Generally, a useful amount of additive in the polyurea system can be an amount of up to about 5 percent by weight of the amine-terminated polyether. Preferably the additive is used in an amount of from about 0.5 to about 3 percent by weight of the amine-terminated polyether. More preferably the additive is used in an amount of from about 1 to about 0.5 percent by weight of the amine-terminated polyether.

The additive can be formulated by blending the individual elements separately from the polyurea reactors. Alternatively, the individual elements can be added directly to the polyurea reaction mixture or to one or more of the other polyurea reactors. For example, when a to stream machine having an A-components and a B-component is used for high pressure impingement mixing as described more fully herein, the additive or the individual elements can be added directly to one of the component tanks. Accordingly, the references herein to the composition of the additive is intended to refer to the relative quantity of these three individual elements whether or not they are actually blended separately from the polyurea reactants. At the same time, if additional elements are used in the additive, the percentages of the elements discussed herein may be adjusted accordingly.

It is believed that the additive does not react with the polyurea reactants, but instead, is simply dispersed within the polyurea matrix. Moreover, the additive has little affect on system reactivity and only a slight affect on elastomer physical properties other then improving ultraviolet stability. Therefore, it is preferable to produce the polyurea elastomers of the present invention by mixing the additive with the polyurea reactions to ensure adequate distribution of the additive within the resulting polyurea matrix. The additive can also be dispersed within the elastomer at any time before the matrix has cured.

Foam stabilizers, for example, , also known as silicone oils or emulsifiers, may be incorporated into the elastomer system. The foam stabilizers may be an organic silane or siloxane. For example, compounds may be used having the formula: RSi[O-(R₂SiO)ₙ-(oxyakylene)ₘR]₃, where R is an alkyl group containing from one to four carbon atoms; n is an integer of from 4 to 8; m is an integer of from 20 to 40, and the oxyalkylene groups are derived from propylene oxide and ethylene oxide. See, for example, US-A-3,194,773, the contents of which are incorporated herein by reference.

Pigments, for example, titanium oxide dioxide, may be incorporated in the elastomer system to impart color properties to the elastomer.

Reinforcing materials, if desired, that are useful in the practice of our invention are known to those skilled in the art. For example, chopped or milled glass fibers, chopped or milled carbon flavors, and/or other mineral fibers are useful.

Other suitable polyamines and materials containing isocyanate functionality are those well known in the polyurea art as described in US-A-4,891,086; US-A-5,013,813; US-A-5,082,917; US-A-5,162,388; US-A-5,171,819; US-A-5,189,075; US-A-5,317,076, US-A-5,418,005; and US-A-5,466,671, the disclosures of which are incorporated herein by reference.

In certain embodiments, the volume of said resin composition to said isocyanate composition is from about 5:1 to about 0.1:1, preferably, about 2:1 to about 0.5:1, and more preferably, about 1:1.

In certain embodiments, the resin component comprises:
a. about 30%, by weight, to about 70%, by weight, based on the total weight, of polyamine, preferably polyether amine;
b. about 1%, by weight, to about 70%, by weight, based on the total weight of the resin component, of 3-{3-[(2-cyanoethylamino)methyl]-3,5,5-trimethylcyclohexylamino propionitrile; and
c. about 0%, by weight, to about 20%, by weight, based on the total weight of the resin component, of one or more additives.

In certain preferred embodiments, the method further comprises the step of applying said polyurea elastomer to form a coating or mastic. In these embodiments, the coating or mastic is a concrete coating, vehicle bedliner coating, steel coating, or roof coating. In preferred embodiments, the coating is applied via spraying or via brushing. Preferably, the coating is applied via spraying.

In certain preferred embodiments, the method further comprises the step of applying said polyurea elastomers to form a filler, adhesive, or joint sealant.

In certain embodiments, the reacting step (c) of the method of the invention occurs by mixing said resin composition and said isocyanate composition in an impingement mixer to for a mixture and by spraying said mixture on a surface or substrate to form a coating or mastic.

In certain embodiments, the invention provides methods for forming a polyurea elastomers coating or mastic, comprising the steps of:
preparing a resin composition comprising:
   a.. 3-{3-[(2-cyanoethylamino)methyl]-3,5,5-trimethylcyclohexylamino propionitrile;
   b. at least one polyetheramine;
preparing an isocyanate composition comprising at least one material having isocyanate functionality; and
reacting said resin composition with said isocyanate composition to form polyurea elastomer coating or mastic.

The product produced by the methods of the invention provide polyurea and polyurethane elastomers having:
■ slower reaction times giving easier processing relative to some prior art products;
■ faster development of physical properties relative to some prior art products;
■ better "green strength" relative to some prior art products;
■ excellent UV stability;
■ improved thermal stability; and
■ improved elongation and tear strength.
In addition, less of the product is needed than prior art systems to achieve the same or better hindering properties. Furthermore, the product provides flexibility by allowing a greater range of indexing of the elastomers, insuring development of properties when sprayed under different conditions

Because of the reactivity of the resin composition and isocyanate composition useful in the methods of the invention, the polyurea elastomers produced are particularly useful in spray systems

The crosslinking that takes place in the method according to the present invention is based on an addition reaction between an isocyanate composition and a resin composition that is reactive with the isocyanate functionality of the isocyanate composition. In particular, the resin composition that is reactive with the isocyanate is a resin composition containing the novel secondary amine chain extender, namely, 3-{3-[(2-cyanoethylamino)methyl]-3,5,5-trimethylcyclohexylamino propionitrile.

The polyurea elastomers of the invention are prepared by mixing the individual components together. The preparation of polyurea elastomers may be carried out solvent-free or in the presence of the solvents conventionally used in polyurea systems. It is an advantage of the methods of the invention that the quantity of solvent used may be greatly reduced when compared with that required in known two-component systems. Examples of suitable solvents include xylene, butyl acetate, methyl isobutyl ketone, methoxypropyl acetate, N-methyl pyrrolidone, Solvesso solvent, petroleum hydrocarbons, isobutanol, butyl glycol, chlorobenzenes and mixtures of such solvents.

The properties of the polyurea elastomers obtained by the methods of the invention may be adjusted, in particular by suitable choice of the nature and proportions of the resin composition and the isocyanate composition. Thus, for example, the presence of relatively high molecular weight, linear polyamine compounds either in the prepolymers or semi-prepolymers of the resin composition and/or isocyanate composition increases the elasticity of the polyurea elastomers; whereas, the absence of such starting components increases the crosslinking density and hardness of the resulting polyurea elastomers.

For carrying out the methods of the invention, the polyurea elastomer systems to be used as a coating or mastic are applied as one or more layers to substrates by known methods such as spraying, brush coating, application with a dual cartridge static mixer, immersion or flooding or by means of rollers or doctor applicators. The methods of the invention are suitable for the formation of coatings on any substrates, e.g., metals (especially steel, aluminum, and iron), plastics (especially polystyrene), wood, concrete, asphalt, or glass. The methods of the invention are particularly suitable for the formation of coatings on sheet steel, for example, for the manufacture of vehicle bodies, vehicle bedliners, machines trim panels, vats or containers, as well as product finishes including metal light poles, fence posts, hardware, sheet metal for construction and roofing, roofing membrane coatings, street marking, and cross walks, manufactured housing, gel coatings for tubs and showers along with gel coatings for marine, recreation vehicles, fleet vehicles, semi-trucks, trailers, motor homes, tub and shower repair or composites industry.

The substrates to be coated by the methods of the invention may be treated with suitable primers before the method of the invention is carried out. A separate curing step is generally not required because the coating sets almost instantaneously. It may be preferred in certain applications, however, to provide a post curing step. The post curing step may be carried out under ambient conditions for a few minutes to several hours, typically about 4 hours to about 8 hours to fully cure, i.e., the state when the material reaches its ultimate physical properties. However, this post curing step is not required. Conventional polyurea systems typically require about 8 hours to about 16 hours to fully cure. Conventional polyurethane systems typically require days to weeks to fully cure.

For carrying out the methods of the invention, the polyurea elastomer systems to be used as a filler, adhesive, or joint sealant, are applied as one or more layers to substrates by known methods such as spraying, brush coating, by dual cartridge static mixer, immersion or flooding or by means of rollers or doctor applicators. The methods of the invention are suitable for adhering, filling, or joining any substrates, e.g., metals, plastics, wood or glass. The methods of the invention are particularly suitable for plural component, high pressure, high temperature impingement mix spray. The substrates to be coated by the methods of the invention may be treated with suitable primers before the process according to the invention is carried out.

The polyurea elastomers of the present invention are characterized by urea linkages formed by the reaction of active amine hydrogens groups with isocyanates. However, it is possible that some of the active-hydrogens group in the reaction mixture are in the form of hydroxyl groups. Thus, the polyurea elastomers referred to herein are those formed from reaction mixtures having at least about 80% of the active hydrogens groups in the form of amine groups. Preferably, the reaction mixtures have at least about 90% of the active hydrogens groups in the form of amine groups, and even more preferably, the reaction mixtures have at least about 95% of the active hydrogens groups in the form of amine groups. Those reaction mixtures that are substantially free from, i.e. less than about 1%, active hydrogens groups in the form of hydroxyl groups are particularly preferred.

Post curing of the elastomer of the invention is optional. Post curing will improve some elastomer properties, such as heat sag. Employment of post curing depends on the desired properties of the end product.

Preferably, the polyurea elastomer systems of the present invention are prepared using a two-stream spray machine. As known in the art, two-stream machines combine two components, an (A) component and a (B) component. The (A) component generally includes an isocyanate material, while the (B) component generally includes an amine material. In addition, other components of the elastomer system, including the UV additive or the individual components, are generally added to the (B) component. The (A) component and (B) component of the polyurea elastomer system are combined or mixed under high pressure; most preferably, they are impingement mixed directly in the high pressure spray equipment which is, for example, a GUSMER® VR-H-3000 proportioner fitted with a GUSMER ® Model GX-7 spray gun. In particular, a first and second pressurized stream of components (A) and (B), respectively, are delivered from two separate chambers of the proportioner and are impacted or impinged upon each other at high velocity to effectuate an intimate mixing of the two components and, thus, the formation of the elastomer system, which is then coated onto the desired substrate via the spray gun.

The volumetric ratio of the (A) component to the (B) component is generally from about 30 to about 70 percent to about 70 to about 30 percent. Preferably, (A) component and (B) component are employed in a 1:1 volumetric ratio.

However, the use of a two-stream machine is not critical to the present invention and included only as one method for mixing the polyurea reactants and additives.

Advantageously the polyurea reactants discussed herein react to form the present polyurea elastomer system without the aid of a catalyst, and a catalyst may be excluded during the practice of this invention.

As a result of improved thermal properties, the polyurea elastomer systems of the instant invention produce excellent candidate materials for automotive interior trim parts which are exposed to heat and sunlight. These pieces may include instrument panel skins, door panel skins, air-bag door skins, and the like. Moreover, these systems can be used in protective coatings, "paint" applications, membranes, barrier coatings, road marking coatings, and decorative coatings.

Due to the fast reactivity of the polyurea spray elastomer technology, the effective gel time of the spray system is measured by spray applying an excess of material on a vertical surface. The time of flow until the material sets or freezes is measured as gel time. The dry time (tack free time) is measured by spraying an area, either vertical or horizontal, with the elastomer and measuring the time required for the spray surface to become dry to the touch without exhibiting any tacky feel. Typically, polyurea elastomers of the present invention have a tack free time of less than two hours, and a gel time of at least about 8 seconds.

### EXAMPLES

The present invention is further defined in the following Examples, in which all parts and percentages are by weight and degrees are Celsius, unless otherwise stated. It should be understood that these examples, while indicating preferred embodiments of the invention, are given by way of illustration only. From the above discussion and these examples, one skilled in the art can ascertain the essential characteristics of this invention, and without departing from the spirit and scope thereof, can make various changes and modifications of the invention to adapt it to various usages and conditions.

### Example 1:

Three polyurea compositions were formulated as shown in Table 1.

**Table 1**

| **Isocyanate Composition:** | | | |
|---|---|---|---|
| | ***1*** | ***2*** | ***3*** |
| | ***Comparative*** | | ***Comparative*** |
| Aliphatic quasi-prepolymer | 15 -15.4 % NCO | | |

| **Resin Composition:** | | | |
|---|---|---|---|
| | ***1*** | ***2*** | ***3*** |
| | ***Comparative*** | | ***Comparative*** |
| Polyetheramine D-2000 | 29.8 | 36.2 | 37.9 |
| Polyetheramine T-5000 | 10.0 | 10.0 | 10.0 |
| Isophorone diamine | 4.0 | 4.2 | 4.2 |
| CLEARLINK® 1000 | 36.2 | --- | --- |
| POLYCLEAR^{™} 136 | --- | 29.6 | --- |
| JEFFLINK^{™} 754 | --- | --- | 27.9 |
| TiO₂ Pigment Dispersion | 20.0 | 20.0 | 20.0 |
| INDEX | 1.15 | 1.15 | 1.15 |
| Iso : Resin volume ratio | 1.00 | 1.00 | 1.00 |

| | | | |
|---|---|---|---|
| CLEARLINK® 1000 = *bis*-(4-N-sec-butylaminocyclohexyl)-methane POLYCLEAR^{™} 136 = 3-{3-[(2-cyanoethylamino)methyl]-3,5,5-trimethyl cyclohexylamino propionitrile JEFFLINK^{™} 754 = (N,N'-diisopropyl)-3-aminomethyl-3,5,5-trimethylcyclohexylamine | | | |

The material was sprayed at the below conditions:

| | |
|---|---|
| Equipment: | plural component mechanical purge gun |
| Temperature: | 150°F |
| Pressure: | about 2,000 psi |
| Relative humidity: | 70% |
| Ambient temperature: | 78°F |

The three formulations were tested and the results are shown in **Table 2** and the test methods used are shown in **Table 3.**

**Table 2**

| | ***1*** | ***2*** | ***3*** |
|---|---|---|---|
| | ***Comparative*** | | ***Comparative*** |
| Gel Time (seconds) | 15 | 15 - 20 | 15 - 20 |
| Shore D Hardness | | about 40 - 45 | |
| Tensile strength (psi) | | about 2000 | |
| Elongation (%) | | about 400 - 500 | |

**Table 3**

| **Test Method** | **Description** |
|---|---|
| ASTM D 638 | Test method for tensile properties of plastics |
| ASTM D 412 | Test methods for Vulcanized Rubber and Thermoplastic Rubbers and Thermoplastic elastomers - Tension |
| ASTM D 624 | Test method for tear strength of conventional vulcanized rubber and thermoplastic elastomers |
| ASTM D 2240 | Test method for rubber property - Durometer hardness |

### Example 2:

Two similar aliphatic polyurea formulations prepared. The comparative formulation contained CLEARLINK® 1000 aliphatic diamine as the chain extender and the formulation of the invention contained POLYCLEAR^{™} 136 aliphatic diamine. The physical properties of each coating are shown in **Table 4** (mechanical properties) and **Table 5** (processing properties) below.

**Table 4**

| ***Formulation*** | ***Chain Extender*** | ***Tensile (psi)*** | ***Elongation*** | ***Tear (pli)*** |
|---|---|---|---|---|
| **1 Comparative** | CLEARLINK® 1000 aliphatic diamine | 1944 | 150% | 331.8 |
| **2** | POLYCLEAR^{™} 136 aliphatic diamine | 1619 | 160% | 303.2 |

| | | | | |
|---|---|---|---|---|
| psi = pounds per square inch pli = pounds per linear inch | | | | |

**Table 5**

| ***Formulation*** | ***Chain Extender*** | ***Gel time (seconds)*** | ***Dry time (seconds)*** | ***Tack Free (Stiffness) (minutes)*** |
|---|---|---|---|---|
| **1 Comparative** | CLEARLINK® 1000 aliphatic diamine | 5-6 | 9-11 | 4-5 |
| **2** | POLYCLEAR^{™} 136 aliphatic diamine | 5-6 | 9-11 | 2-3 |

The Tack Free (Stiffness) is a key property. The formulation containing POLYCLEAR^{™}136 chain extender of the invention develops properties more quickly than the formulation containing CLEARLINK® 1000 chain extender (comparative). Polyurea systems formulated with POLYCLEAR^{™}136 chain extender of the invention are more like an aromatic polyurea system. Therefore, one can put a part into service more quickly using a formulation containing POLYCLEAR 136 chain extender than a formulation containing CLEARLINK 1000 chain extender.

When ranges are used herein for physical properties, such as molecular weight, or chemical properties, such as chemical formulae, all combinations and subcombinations of ranges specific embodiments therein are intended to be included.

The disclosures of each patent, patent application and publication cited or described in this document are hereby incorporated herein by reference, in its entirety.

Those skilled in the art will appreciate that numerous changes and modifications can be made to the preferred embodiments of the invention and that such changes and modifications can be made without departing from the spirit of the invention. It is, therefore, intended that the appended claims cover all such equivalent variations as fall within the true spirit and scope of the invention.

## Claims

1. A method, comprising the steps of:
preparing a resin composition comprising:
a) 3-{3-[(2-cyanoethylamino)methyl]-3,5,5-trimethylcyclohexylamino propionitrile; and
b) optionally, at least one polyamine;
preparing an isocyanate composition comprising at least one material having isocyanate functionality; and
reacting said resin composition with said isocyanate composition to form a polyurea elastomer.

2. A method according to claim 1, wherein said resin composition further comprises at least one polyol.

3. A method according to any preceding claim, wherein said 3-{3-[(2-cyanoethylamino)methyl]-3,5,5-trimethylcyclohexyl aminopropionitrile is formed by reacting 3-aminomethyl-3,5,5- trimethylcyclohexylamine and acrylonitrile.

4. A method according to claim 3, wherein an excess of said trimethylcyclohexylamine is present.

5. A method according to any preceding claim, wherein said polyamine is a polyetheramine, polyesteramine, polysilaneamine, polysiloxane amine, polybutadieneamine, or a mixture thereof.

6. A method according to claim 5, wherein said polyetheramine is polyoxy(C₁-C₆) alkylenediamine.

7. A method according to claim 6, wherein said polyoxy(C₁-C₆)alkylenediamine is a polyoxyethylene diamine, polyoxypropylenediamine, polyoxybutylenediamine, polyoxypropylenepolyoxy(C₁-C₆)alkylene-diamine, polytetramethylene ether glycol diamine, or a mixture thereof.

8. A method according to claim 7, wherein said polyoxy(C₁-C₆)alkylenediamine is a polyoxypropylenediamine, polytetramethylene ether glycol diamine, or a mixture thereof.

9. A method according to any preceding claim, wherein said material having isocyanate functionality is an adduct having isocyanate functionality, a prepolymer having isocyanate functionality, or a quasi-prepolymer having isocyanate functionality.

10. A method according to any of claims 1 to 8, wherein said material having isocyanate functionality is aliphatic.

11. A method according to any preceding claim, wherein said resin composition further comprises at least one additive selected from the group consisting of pigment, adhesion promoter, ultraviolet stabiliser, antioxidant, thixotrope, rheology modifier, texturizing agent, defoamer, dispersant, solvent, plasticizer, filler, preservative, antimicrobial, and mixtures thereof.

12. A method according to any preceding claim, wherein the volume of said resin composition to said isocyanate composition is from about 5:1 to about 0.1:1.

13. A method according to any preceding claim, wherein the volume of said resin composition to said isocyanate composition is from about 2:1 to about 0.5:1.

14. A method according to any preceding claim, wherein the volume of said resin composition to said isocyanate composition is from about 1:1.

15. A method according to any preceding claim, wherein said resin component comprises:
a) about 30%, by weight, to about 70% by weight, based on the total weight, of said polyamine;
b) about 1%, by weight, to about 70% by weight based on the total weight of the resin component, of said 3-[3-[(2-cyanoethylamino)methyl]-3,5,5-trimethylcyclohexylamino propionitrile; and
c) about 0%, by weight, to about 20%, by weight, based on the total weight of the resin component, of said additive where included.

16. A method according to any preceding claim, further comprising the step of applying said polyurea elastomer to form a coating or mastic.

17. A method according to claim 15, wherein said coating or mastic is a concrete coating, vehicle bedliner coating, steel coating, roof coating, wood coating, plastic coating, asphalt coating, or gel coating.

18. A method according to claim 17, wherein said coating is applied via spraying.

19. A method according to claim 18, wherein said coating is applied via brushing.

20. A method according to any of claims 1 to 15, further comprising the step of applying said polyurea elastomers to form a filler, adhesive, or joint sealant.

21. A method according to any preceding claim, wherein said reacting step (c) occurs by mixing said resin composition and said isocyanate composition in an impingement mixer to for a mixture and by spraying said mixture on a surface to form a coating or mastic.

22. A method for forming a polyurea elastomers coating, comprising the steps of:
a) 3-[3-[(2-cyanoethylamino)methyl]-3,5,5-trimethylcyclohexylamino propionitrile;
b) at least one polyetheramine; and
c) optionally, at least one polyol;
preparing an isocyanate composition comprising at least one material having isocyanate functionality; and
reacting said resin composition with said isocyanate composition to form polyurea elastomer coating.
